(19)

Europäisches
Patentamt
European
Patent Office
Office européen
des brevets

(11) **EP 3 232 382 A1**

(12) **EUROPEAN PATENT APPLICATION**

(43) Date of publication:
**18.10.2017 Bulletin 2017/42**

(51) Int Cl.:
***G06Q 10/06*** *(2012.01)*

(21) Application number: **17161105.6**

(22) Date of filing: **15.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **11.04.2016 US 201615095764**

(71) Applicant: **Simmonds Precision Products, Inc.
Vergennes, VT 05491 (US)**

(72) Inventor: **DION, Bernard
Monkton, VT Vermont 05473 (US)**

(74) Representative: **Iceton, Greg James
Dehns
St Bride's House
10 Salisbury Square
London EC4Y 8JD (GB)**

(54) **PHYSICAL COMPONENT PREDICTED REMAINIG USEFUL LIFE**

(57)    In one example, a method includes generating a set of predicted load values for at least one physical component, each predicted load value corresponding uniquely to one of an ordered sequence of index values. The method further includes determining a set of predicted wear indicator values corresponding to the at least one physical component. Each predicted wear indicator value corresponds uniquely to one of the ordered sequence of index values and is determined based on one of the predicted load values that corresponds to a sequentially previous index value and one of the predicted wear indicator values that corresponds to the sequentially previous index value. The method further includes determining a predicted amount of remaining useful life of the at least one physical component based on the set of predicted wear indicator values, and outputting an indication of the predicted amount of remaining useful life.

Fig. 1

**Description**

BACKGROUND

The present disclosure relates generally to computerized systems, and more particularly to computerized systems that can predict a remaining useful life of physical components.

Many complex systems of components, such as modern aircraft systems, incorporate health and usage management systems (HUMS) to diagnose fault conditions and/or predict a remaining useful life of system components. Such HUMS often utilize and/or include sensor devices that monitor physical characteristics of the system components and relay the measured data to a central controller device. The HUMS controller typically compares the measured data to one or more fault thresholds to identify, e.g., current fault conditions, or to predefined diagnostic patterns to predict a remaining useful life of the components. Reliable prediction of a remaining useful life, however, relies on accurate and extensive data defining the known diagnostic patterns. Inaccurate or incomplete characterization of the underlying diagnostic data (often gathered offline from components having a known fault condition) can negatively impact performance of the remaining useful life estimation, thereby possibly decreasing system reliability and increasing the time and cost associated with corresponding maintenance activities.

SUMMARY

In one example, a method includes generating, by a computing device comprising at least one processor, a set of predicted load values for at least one physical component. Each predicted load value from the set of predicted load values can correspond uniquely to one of an ordered sequence of index values. The method further includes determining, by the computing device, a set of predicted wear indicator values corresponding to the at least one physical component. Each predicted wear indicator value of the set of predicted wear indicator values can correspond uniquely to one of the ordered sequence of index values. Each predicted wear indicator value of the set of predicted wear indicator values can be determined based on one of the predicted load values from the set of predicted load values that corresponds to a sequentially previous index value and one of the predicted wear indicator values from the set of predicted wear indicator values that corresponds to the sequentially previous index value. The method further includes determining, by the computing device, a predicted amount of remaining useful life of the at least one physical component based on the set of predicted wear indicator values, and outputting, by the computing device, an indication of the predicted amount of remaining useful life of the at least one physical component.

In another example, a device includes one or more processors and computer-readable memory. The computer-readable memory is encoded with instructions that, when executed by the at least one processor, cause the device to generate a set of predicted load values for at least one physical component of the aircraft. Each predicted load value from the set of predicted load values can correspond uniquely to one of an ordered sequence of index values. The computer-readable memory is further encoded with instructions that, when executed by the at least one processor, cause the device to determine a set of predicted wear indicator values corresponding to the at least one physical component. Each predicted wear indicator value of the set of predicted wear indicator values can correspond uniquely to one of the ordered sequence of index values. Each predicted wear indicator value of the set of predicted wear indicator values can be determined based on one of the predicted load values from the set of predicted load values that corresponds to a sequentially previous index value and one of the predicted wear indicator values from the set of predicted wear indicator values that corresponds to the sequentially previous index value. The computer-readable memory is further encoded with instructions that, when executed by the at least one processor, cause the device to determine a predicted amount of remaining useful life of the at least one physical component of the aircraft based on the set of predicted wear indicator values, and output an indication of the predicted amount of remaining useful life of the at least one physical component of the aircraft.

In another example, a health and usage management system includes at least one sensor disposed within an aircraft and a controller device disposed within the aircraft. The controller device includes one or more processors and computer-readable memory. The computer-readable memory is encoded with instructions that, when executed by the at least one processor, cause the controller device to receive measured sensor data for at least one physical component of the aircraft from the at least one sensor, and determine, based on the measured sensor data, an operating regime of the at least one physical component. The computer-readable memory is further encoded with instructions that, when executed by the at least one processor, cause the controller device to generate a set of predicted load values for the least one physical component of the aircraft based on the operating regime. Each predicted load value from the set of predicted load values can correspond uniquely to one of an ordered sequence of index values. The computer-readable memory is further encoded with instructions that, when executed by the at least one processor, cause the controller device to determine a set of predicted wear indicator values corresponding to the at least one physical component. Each predicted wear indicator value of the set of predicted wear indicator values can correspond uniquely to one of the ordered sequence of index values and can be determined based on one of the predicted load values from the set of predicted load values that corresponds to a sequentially previous index value and one of the predicted wear indicator values from the set of predicted wear indicator values that corresponds to the sequentially previous index value. The computer-readable memory is further encoded with instructions that, when executed by the at least one processor, cause the controller device to determine a predicted amount of remaining useful life of the at least one physical component of the aircraft based on the set of predicted wear indicator values, and output an indication of the predicted amount of remaining useful life of the at least one physical component of the aircraft.

BRIEF DESCRIPTION OF THE DRAWINGS

FIG. 1 is a schematic block diagram of an example health and usage management system that can determine a predicted amount of remaining useful life of at least one physical component based on a set of predicted wear indicator values.

FIG. 2 is a flow diagram illustrating example operations to iteratively determine a set of predicted wear indicator values for use in predicting an amount of remaining useful life of at least one physical component.

DETAILED DESCRIPTION

According to techniques of this disclosure, a computing device can determine a set of predicted wear indicator values (e.g., wear indicator values corresponding to amplitude of vibration, level of strain, or other wear indicator values) for at least one physical component under a predicted set of load values (e.g., vibration, strain, torque, rotational speed, or other load values). The set of predicted load values can be associated with an ordered sequence of index values that identify a sequence (and relative time) of each of the predicted loads. Such predicted load sets can be determined, e.g., based on a current or predicted operating regime of the physical component. Example operating regimes can include a phase of flight of an aircraft including the physical component, a speed of a vehicle that includes the physical component, a phase of operation of the physical component (e.g., startup, wind-down, etc.) or other operating regimes. The computing device can iteratively determine the predicted wear indicator values over the ordered sequence of index values to arrive at a set of predicted wear indicator values that indicate a predicted wear (e.g., physical and/or functional degradation) of the physical component over time. The predicted wear indicator values can be compared to threshold wear criteria indicating a fault condition of the physical component to determine an index number and associated time corresponding to a predicted fault condition based on the predicted wear. As such, a computing device implementing techniques described herein can determine a predicted amount of remaining useful life based on an amount of time (e.g., corresponding to the index values) remaining until the predicted occurrence of the fault condition. Accordingly, techniques described herein can enable a computing device to predict an amount of remaining useful life of a physical component based on predicted load values without requiring comparison to, e.g., extensive diagnostic pattern data.

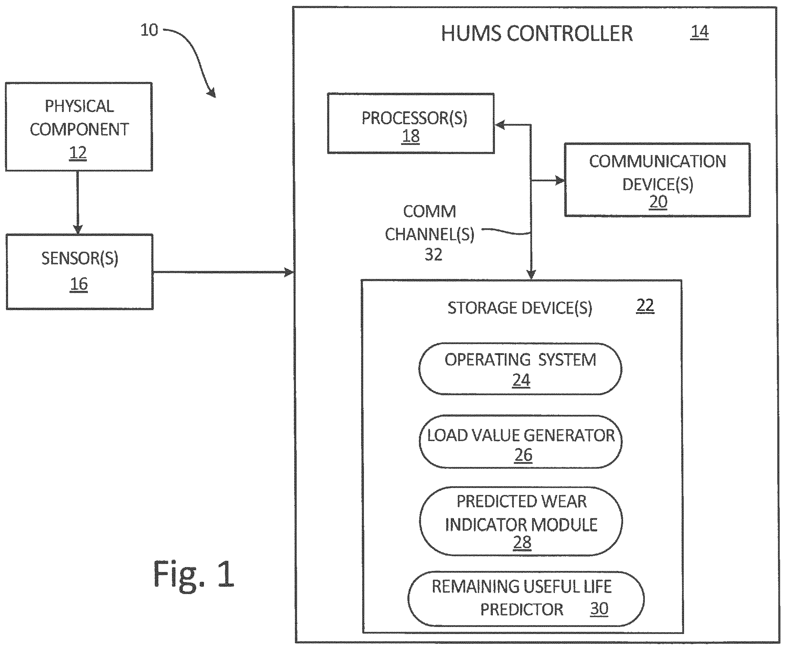

FIG. 1 is a schematic block diagram of health and usage management system (HUMS) 10 that can determine a predicted amount of remaining useful life of at least one physical component 12 based on a set of predicted wear indicator values. As illustrated in FIG. 1, HUMS 10 further includes HUMS controller 14 and one or more sensors 16. HUMS controller 14 includes one or more processors 18, one or more communication devices 20, and one or more storage devices 22. Storage device(s) 22 includes operating system 24, load value generator 26, predicted wear indicator module 28, and remaining useful life (RUL) predictor 30.

Physical component 12 can be any physical component that can experience functional and/or physical degradation during operation thereof. For instance, physical component 12 can be a rotating component, such as a shaft, bearing, or other rotational component included in, e.g., a gas turbine engine of an aircraft. As another example, physical component 12 can be a structural support component, such as a strut of a gas turbine engine or aircraft landing gear. In general, physical component 12 can be any stand-alone or system-integrated physical component that can experience operational degradation, such as cracking, bending, warping, or other structural or functional degradation.

Sensor(s) 16 can include any one or more sensing devices capable of sensing physical characteristics of physical component 12 during operation of physical component 12. For instance, sensor(s) 16 can include any one or more of an accelerometer, strain gauge, temperature sensor, pressure sensor, torque sensor, rotary encoder, or other sensors. Sensor(s) 16, as illustrated in FIG. 1, can be operatively coupled to physical component 12 and HUMS controller 14 to sense the one or more physical characteristics of physical component 12 during operation of physical component 12 and transmit the sensed data to HUMS controller 14. For instance, sensor(s) 16 can be electrically coupled, physically coupled, or otherwise coupled to physical component 12 to measure physical characteristics of physical component 12 during operation thereof. Sensor(s) 16 can be electrically and/or communicatively coupled with HUMS controller 14 via, e.g., one or more wired or wireless communication networks, or both.

As illustrated in FIG. 1, HUMS 10 further includes HUMS controller 14. HUMS controller 14 can be a controller device disposed within, e.g., an aircraft and configured to control operation of HUMS 10. For instance, HUMS controller 14 can be an electronics device positioned within an electronics bay or other area of an aircraft and configured to send and receive data to and from one or more aircraft systems via an aircraft communications data bus (not illustrated) or other communications media. While illustrated and described in the example of FIG. 1 as a controller device for HUMS 10, aspects of this disclosure are not so limited. For example, HUMS controller 14 can take the form of any computing device or network of computing devices that can perform the functions attributed herein to HUMS controller 14. For instance, in other examples, HUMS controller 14 can be a computing device that performs functions attributed herein to HUMS controller 14 to determine a remaining useful life of physical component 12.

HUMS controller 14, as illustrated in FIG. 1, further includes one or more processors 18. Processor(s) 18, in one example, are configured to implement functionality and/or process instructions for execution within HUMS controller 14. For instance, processor(s) 18 can be capable of processing instructions stored in storage device(s) 22. Examples of processor(s) 18 can include any one or more of a microprocessor, a controller, a digital signal processor (DSP), an application specific integrated circuit (ASIC), a field-programmable gate array (FPGA), or other equivalent discrete or integrated logic circuitry.

Storage device(s) 22 can be configured to store information within HUMS controller 14 during operation. Storage device(s) 22, in some examples, are described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device(s) 22 are a temporary memory, meaning that a primary purpose of storage device(s) 22 is not long-term storage. Storage device(s) 22, in some examples, are described as volatile memory, meaning that storage device(s) 22 do not maintain stored contents when power to HUMS controller 14 is turned off. Examples of volatile memories can include random access memories (RAM), dynamic random access memories (DRAM), static random access memories (SRAM), and other forms of volatile memories. In some examples, storage device(s) 22 are used to store program instructions for execution by processor(s) 18. Storage device(s) 22, in one example, are used by software or applications running on HUMS controller 14 (e.g., a software program implementing functionality attributed herein to load value generator 26, predicted wear indicator module 28, and/or RUL predictor 30) to temporarily store information during program execution.

Storage device(s) 22, in some examples, also include one or more computer-readable storage media. Storage device(s) 22 can be configured to store larger amounts of information than volatile memory. Storage device(s) 22 can further be configured for long-term storage of information. In some examples, storage device(s) 22 include non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

HUMS controller 14, in some examples, also includes communications device(s) 20. HUMS controller 14, in one example, utilizes communication device(s) 20 to communicate with external devices via one or more networks, such as one or more wired or wireless networks or both. Communications device(s) 20, in some examples, can include discrete and/or analog circuitry configured to send and receive data according to a defined communication protocol, such as the Aeronautical Radio, Incorporated (ARINC) 429 communication protocol. In certain examples, communications device(s) 20 can be a network interface card, such as an Ethernet card, an optical transceiver, a radio frequency transceiver, or any other type of device that can send and receive information. Other examples of such network interfaces can include Bluetooth, 3G, 4G, and WiFi radio computing devices, as well as Universal Serial Bus (USB).

Each of processor(s) 18, communication device(s) 20, and storage device(s) 22 can be interconnected (physically, communicatively, and/or operatively) for inter-component communications. For instance, as illustrated in FIG. 1, processor(s) 18, communication device(s) 20, and storage device(s) 22 can be coupled by one or more communication channels 32. In some examples, communication channel(s) 32 can include a system bus, a network connection, an inter-process communication data structure, or any other structure or method for communicating data.

As illustrated in FIG. 1, storage device(s) 22 can include operating system 24, load value generator 26, predicted wear indicator module 28, and RUL predictor 30. Operating system 24 can be executable by processor(s) 18 to control the operation of components of HUMS controller 14. For instance, operating system 24, in one example, facilitates the communication of one or more software programs implementing techniques attributed herein to load value generator 26 predicted wear indicator module 28, and RUL predictor 30 with processor(s) 18 and communication device(s) 20.

In operation, sensor(s) 16 measure physical characteristics of physical component 12 during operation of physical component 12 and transmit the measured sensor data to HUMS controller 14. Physical characteristics of physical component 12 measured by sensor(s) 16 can include, e.g., vibration data sensed via one or more accelerometers and/or velocimeters, structural response data measured under a physical load via a structural response sensor (e.g., strain data sensed via one or more strain gauges), temperature data sensed via one or more temperature sensors, pressure data sensed via one or more pressure sensors, or other measured sensor data corresponding to physical characteristics of physical component 12. As one example, physical component 12 can be a rotating shaft of, e.g., a gas turbine engine. Sensor(s) 16 can include an accelerometer that senses acceleration data corresponding to vibration of the rotating shaft as the shaft is rotated at one or more frequencies. As another example, physical component 12 can be a strut of, e.g., a landing gear system of an aircraft. In such an example, sensor(s) 16 can include a structural response sensor, such as a strain gauge, that senses structural response data (e.g., strain data) experienced by physical component 12 under a physical loading force.

HUMS controller 14 receives the measured sensor data from sensor(s) 16 via, e.g., communication device(s) 20. As is further described below, HUMS controller 14 can generate a set of predicted load values (i.e., predicted future load values) for physical component 12, and can iteratively determine a set of predicted wear indicator values corresponding to physical component 12 from which HUMS controller 14 can determine a predicted amount of remaining useful life of physical component 12. For example, load value generator 26 can determine a set of predicted load values, such as predicted force, torque, rotary speed, or other predicted load values for physical component 12. Each load value from the set of predicted load values can correspond uniquely to one of an ordered sequence of index values, as is further described below.

Predicted wear indicator module 28 can iteratively determine a set of predicted wear indicator values corresponding to physical component 12. Wear indicator values can include, e.g., amplitude of vibration, amplitude of strain, torque, rotational speed, or other values usable to determine and/or predict wear (i.e., physical and/or functional degradation) of physical component 12. Each successive iteration of the wear indicator value prediction can be based on predicted load values corresponding to a sequentially previous iteration (e.g., a predicted wear indicator value associated with a sequentially previous index value) and a sequentially previous predicted load value. RUL predictor 30 can determine an estimated amount of remaining useful life of physical component 12 based on the predicted wear indicator values, such as by comparing successive iterations of the predicted wear indicator values to threshold wear criteria to determine an iteration value (and associated relative time) corresponding to a fault condition of physical component 12. As such, HUMS controller 14, implementing techniques of this disclosure, can determine a predicted amount of remaining useful life of physical component 12 based on predicted load values of physical component 12.

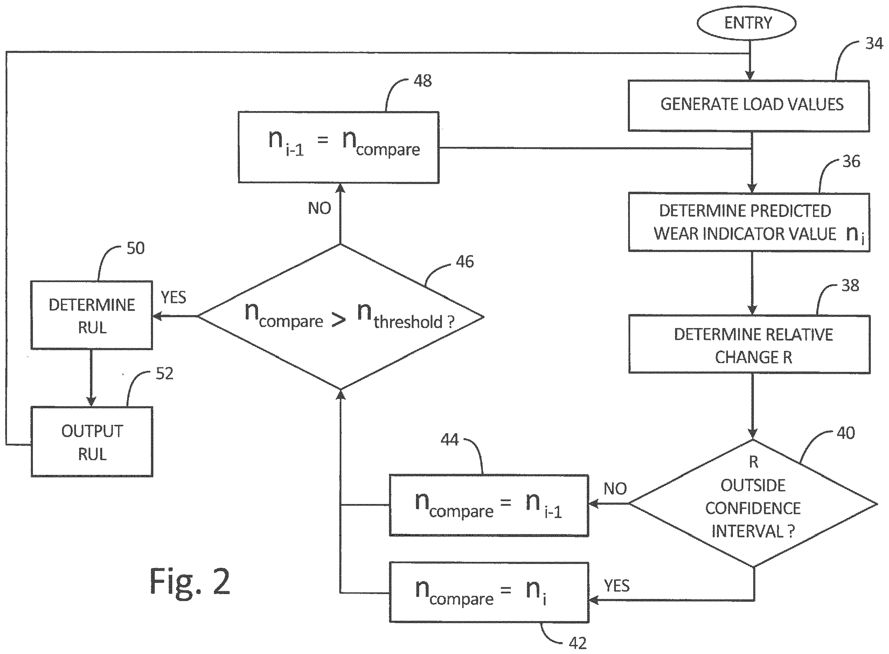

FIG. 2 is a flow diagram illustrating example operations to iteratively determine a set of predicted wear indicator values for use in predicting an amount of remaining useful life of at least one physical component. For purposes of clarity and ease of discussion, the example operations are described below within the context of HUMS 10 of FIG. 1.

A set of predicted load values for at least one physical component can be generated (34). For example, load value generator 26 can generate a set of predicted load values for physical component 12. Example load values can include, e.g., torque, physical load (e.g., force), vibration, rotational speed, or other load values that can cause physical and/or functional degradation of physical component 12. Each predicted load value from the set of predicted load values can correspond uniquely to one of an ordered sequence of index values (i.e., corresponding to one, and only one, index value). The ordered sequence of index values can be, e.g., an ordered sequence of integers, such as an ordered sequence ranging from the integer value zero to an arbitrarily large integer value, each successive index value incrementing by a value of one. In other examples, the ordered sequence of index values need not be integer values, and need not increment by a value of one. In general, the ordered sequence of index values can be any ordered sequence that defines a relative position of index values within the ordered sequence.

Each index value from the ordered sequence of index values can correspond to a defined amount of elapsed time between successive index values, such as an elapsed time of 0.1 seconds, 1 second, or other defined amounts of elapsed time. Accordingly, the ordered sequence of index values can indicate a relative time between any two of the index values within the ordered sequence.

In some examples, load generator 26 can generate the predicted set of load values for physical component 12 based on a current or predicted operating regime of physical component 12. For example, load generator 26 can determine the current or predicted operating regime based on measured sensor data received from sensor(s) 16. Examples of a current or predicted operating regime can include, e.g., a phase of flight of an aircraft including physical component 12 (e.g., a takeoff phase, a climb phase, a cruise phase, a descent phase, a landing phase, or other phase of flight of the aircraft), a speed of a vehicle (e.g., aircraft or other vehicle) that includes physical component 12, an operating phase of physical component 12 or system that includes physical component 12 (e.g., startup phase, normal operating phase, wind-down phase, or other operating phase), or other operating regimes.

Load generator 26 can generate the set of predicted load values based on, e.g., data gathered from physical components that are substantially similar to physical component 12 under one or more operating regimes. For example, load values can be measured for one or more physical components that are substantially similar to physical component 12 during testing or other offline activities. In certain examples, load values experienced by physical component 12 can be measured and stored during operation thereof. The set of predicted load values can be generated from the aggregation of the measured load values, such as by random sampling of the aggregation of load values.

A set of predicted wear indicator values corresponding to the at least one physical component can be determined (36). For example, predicted wear indicator module 28 can determine a set of predicted wear indicator values corresponding to physical component 12. Wear indicator values can include, e.g., an amplitude of vibration, an amplitude of strain, or other values that can indicate an amount of physical and/or functional degradation of physical component 12. Each predicted wear indicator value of the set of predicted wear indicator values can correspond uniquely to one of the ordered sequence of index values. Predicted wear indicator module 28 can determine each of the predicted wear indicator values based on one of the predicted load values from the set of predicted load values that corresponds to a sequentially previous index value and one of the predicted wear indicator values from the set of predicted wear indicator values that corresponds to the sequentially previous index value. For example, predicted wear indicator module 28 can determine each predicted wear indicator value from the set of predicted wear indicator values according to the following equation:

$$n_i = k \frac{L_{i-1}}{n_{i-1}} + n_{i-1} \qquad \text{Equation (1)}$$

where "i" represents a current index value from the ordered sequence of index values, "i-1" represents an index value from the ordered sequence of index values that is sequentially previous to the current index value represented by "i", $n_i$ represents the predicted wear indicator value corresponding to the current index value "i", k is a constant that correlates load and wear for the at least one physical component, "$L_{i-1}$" represents a predicted load value from the set of predicted load values that corresponds to the index value that is sequentially previous to the current index value "i", and "$n_{i-1}$" represents the predicted wear indicator value from the set of predicted wear indicator values that corresponds to the index value that is sequentially previous to the current index value "i".

The constant "k", correlating load and wear for the at least one physical component (e.g., physical component 12) can be determined based on data gathered, e.g., offline during testing of one or more physical components that are substantially similar to physical component 12. For example, one or more physical components that are substantially similar to physical component 12 can be subjected to load values and the physical and/or functional degradation of the physical component can be measured (e.g., measured bending, measured amount of crack propagation, measured vibrational amplitude or frequency changes, or other such measurements). The constant, "k", can be determined via regression analysis (e.g., least squares regression) or other analysis that correlates load and the measured amount of wear for the at least one physical component.

A relative change between each predicted wear indicator value and the predicted wear indicator value that corresponds to the sequentially previous index value can be determined (38). For example, predicted wear indicator module 38 can determine a relative change of wear indicator values according to the following equation:

$$R = \frac{n_i - n_{i-1}}{n_{i-1}} \qquad \text{Equation (2)}$$

where "R" represents the relative change, "$n_i$" represents the predicted wear indicator value corresponding to the current index value "i", and "$n_{i-1}$" represents the predicted wear indicator value corresponding to the index value that is sequentially previous to the current index value "i".

It can be determined whether the relative change between predicted wear indicator values is outside a confidence interval (40). For example, predicted wear indicator module 28 can compare the determined relative change (i.e., "R" in this example) to a confidence interval ranging from a lower bound of the relative change to an upper bound of the relative change. The confidence interval can be determined based on statistical or other analyses of data gathered, e.g., offline from one or more physical components that are substantially similar to physical component 12 or online from data gathered from operation of physical component 12. For instance, the confidence interval can be determined based on a 90% confidence interval, a 95% confidence interval, or other confidence interval ranges of similar components having a known, healthy operational status while subjected to physical loads. The healthy operational status can indicate that the physical component satisfies threshold criteria corresponding to acceptable operating parameters according to a design specification of the physical component.

In examples where predicted wear indicator module 28 determines that the determined relative change (i.e., "R" in this example) is not included in the range of relative changes ranging from the lower confidence interval bound to the upper confidence interval bound ("YES" branch of 40), wear indicator module 28 can assign a comparison value (e.g., $n_{compare}$ in this example) to the predicted wear indicator value corresponding to the current index (42). In examples where predicted wear indicator module 28 determines that the determined relative change ("R") is included in the range of relative changes ranging from the lower confidence interval bound to the upper confidence interval bound, wear indicator module 28 can assign the comparison value ($n_{compare}$) to the predicted wear indicator value corresponding to the sequentially previous index value (44).

Predicted wear indicator module 28 can compare the comparison value ($n_{compare}$) to threshold wear criteria, such as a threshold wear indicator value, to determine whether the comparison value ($n_{compare}$) satisfies the threshold wear criteria (46). For instance, predicted wear indicator module 28 can compare the comparison value ($n_{compare}$) to a threshold wear indicator value ($n_{threshold}$) to determine whether the comparison value is greater than (or equal to) the threshold wear indicator value. The threshold wear criteria, such as the threshold wear indicator value $n_{threshold}$, can indicate to a wear indicator value that corresponds to a fault condition of the at least one physical component. The fault condition can correspond to, e.g., a physical or functional degradation of the at least one physical component (e.g., physical component 12) that results in a failure of the at least one physical component to satisfy acceptable operating criteria according to a design specification of the physical component.

In examples where predicted wear indicator module 28 determines that the comparison value does not satisfy the threshold wear criteria ("NO" branch of 46), predicted wear indicator module 28 can assign the wear indicator value corresponding to the sequentially previous index value to the comparison value (48), and can continue to iteratively determine the set of predicted wear indicator values.

In examples where predicted wear indicator module 28 determines that the comparison value satisfies the threshold wear criteria ("YES" branch of 46), RUL predictor 30 can determine a predicted amount of remaining useful life of the at least one physical component (50). For example, RUL predictor 30 can determine the predicted amount of remaining useful life of physical component 12 based on the value of the current one of the ordered sequence of index values during the iteration in which the comparison value satisfied the threshold wear criteria. That is, because each index value from the ordered sequence of index values can correspond to a defined amount of elapsed time between successive index values (e.g., 0.1 seconds, 0.5 seconds, 1 second, or other defined amounts of elapsed time), the index value in which the comparison value satisfied the threshold wear criteria can indicate an elapsed time since a first of the ordered sequence of index value. As one example, a current index value at which the comparison value satisfied the threshold wear criteria may be 100,000, the index values may be the ordered sequence of integer values beginning at the integer value of 1, and the defined elapsed time between successive index values may be 1 second. In such an example, RUL predictor 50 can determine the remaining useful life of physical component 12 as 100,000 seconds.

RUL predictor 50 can output an indication of the predicted amount of remaining useful life of the at least one physical component (52). For instance, RUL predictor 50 can store the predicted remaining useful life, as well as the set of predicted load values, the set of predicted wear indicator values, or other information to storage device(s) 22 for later retrieval by, e.g., a maintenance computer or other remote device. RUL predictor 50 can output the stored data in response to, e.g., a query from the maintenance computer. In certain examples, RUL predictor 50 can output an indication of the remaining useful life of physical component 12 via a data bus or other communication pathway to, e.g., a data concentrator unit, a display device, or other device in communication with HUMS 10.

As such, techniques described herein can enable a computing device (e.g., HUMS controller 14) to determine a predicted amount of remaining useful life of at least one physical component based on an amount of time (e.g., corresponding to an ordered sequence of index values) remaining until a predicted occurrence of a fault condition. The techniques can enable the computing device to predict the amount of remaining useful life of the at least one physical component based on predicted load values without requiring comparison of measured sensor data to extensive diagnostic pattern data.

The following are non-exclusive descriptions of possible embodiments of the present invention.

A method can include generating, by a computing device comprising at least one processor, a set of predicted load values for at least one physical component. Each predicted load value from the set of predicted load values can correspond uniquely to one of an ordered sequence of index values. The method can further include determining, by the computing device, a set of predicted wear indicator values corresponding to the at least one physical component. Each predicted wear indicator value of the set of predicted wear indicator values can correspond uniquely to one of the ordered sequence of index values. Each predicted wear indicator value of the set of predicted wear indicator values can be determined based on one of the predicted load values from the set of predicted load values that corresponds to a sequentially previous index value and one of the predicted wear indicator values from the set of predicted wear indicator values that corresponds to the sequentially previous index value. The method can further include determining, by the computing device, a predicted amount of remaining useful life of the at least one physical component based on the set of predicted wear indicator values, and outputting, by the computing device, an indication of the predicted amount of remaining useful life of the at least one physical component.

The method of the preceding paragraph can optionally include, additionally and/or alternatively, any one or more of the following features, configurations, operations, and/or additional components:

Determining the set of predicted wear indicator values can include determining each predicted wear indicator value of the set of predicted wear indicator values according to the equation:

$$n_i = k \frac{L_{i-1}}{n_{i-1}} + n_{i-1}$$

where i is a current one of the ordered sequence of index values, i-1 is the sequentially previous index value, n; is the predicted wear indicator value, k is a constant that correlates load and wear for the at least one physical component, $L_{i-1}$ is the one of the predicted load values from the set of predicted load values that corresponds to the sequentially previous index value, and $n_{i-1}$ is the one of the predicted wear indicator values from the set of predicted wear indicator values that corresponds to the sequentially previous index value.

Determining the predicted amount of remaining useful life of the at least one physical component based on the set of predicted wear indicator values can include determining a relative change between each predicted wear indicator value and the one of the predicted wear indicator values from the set of predicted wear indicator values that corresponds to the sequentially previous index value, and determining whether the relative change is within a confidence interval.

Determining the relative change can include determining the relative change according to the equation:

$$R = \frac{n_i - n_{i-1}}{n_{i-1}}$$

where R is the relative change, $n_i$ is the predicted wear indicator value, and $n_{i-1}$ is the one of the predicted wear indicator values from the set of predicted wear indicator values that corresponds to the sequentially previous index value.

Determining the predicted amount of remaining useful life of the at least one physical component based on the set of predicted wear indicator values can further include identifying, in response to determining that the relative change is within the confidence interval, whether the predicted wear indicator value satisfies threshold wear criteria, and determining, in response to identifying that the predicted wear indicator value satisfies the threshold wear criteria, the remaining useful life of the at least one physical component based on a value of a current one of the ordered sequence of index values corresponding to the predicted wear indicator value.

Determining the predicted amount of remaining useful life of the at least one physical component based on the set of predicted wear indicator values can further include identifying, in response to determining that the relative change is not within the confidence interval, whether the one of the predicted wear indicator values from the set of predicted wear indicator values that corresponds to the sequentially previous index value satisfies threshold wear criteria, and determining, in response to identifying that the one of the predicted wear indicator values from the set of predicted wear indicator values that corresponds to the sequentially previous index value satisfies the threshold wear criteria, the remaining useful life of the at least one physical component based on the sequentially previous index value.

Determining the set of predicted load values for the at least one physical component can include determining the set of predicted load values based on an operating regime of the at least one physical component.

The method can further include measuring sensor data of the at least one physical component, and determining the operating regime based on the measured sensor data.

A device can include one or more processors and computer-readable memory. The computer-readable memory can be encoded with instructions that, when executed by the at least one processor, cause the device to generate a set of predicted load values for at least one physical component of the aircraft. Each predicted load value from the set of predicted load values can correspond uniquely to one of an ordered sequence of index values. The computer-readable memory can be further encoded with instructions that, when executed by the at least one processor, cause the device to determine a set of predicted wear indicator values corresponding to the at least one physical component. Each predicted wear indicator value of the set of predicted wear indicator values can correspond uniquely to one of the ordered sequence of index values. Each predicted wear indicator value of the set of predicted wear indicator values can be determined based on one of the predicted load values from the set of predicted load values that corresponds to a sequentially previous index value and one of the predicted wear indicator values from the set of predicted wear indicator values that corresponds to the sequentially previous index value. The computer-readable memory can be further encoded with instructions that, when executed by the at least one processor, cause the device to determine a predicted amount of remaining useful life of the at least one physical component of the aircraft based on the set of predicted wear indicator values, and output an indication of the predicted amount of remaining useful life of the at least one physical component of the aircraft.

The device of the preceding paragraph can optionally include, additionally and/or alternatively, any one or more of the following features, configurations, operations, and/or additional components:

The computer-readable memory can be further encoded with instructions that, when executed by the one or more processors, cause the device to determine the set of predicted wear indicator values by at least causing the device to determine each predicted wear indicator value of the set of predicted wear indicator values according to the equation:

$$n_i = k \frac{L_{i-1}}{n_{i-1}} + n_{i-1}$$

where i is a current one of the ordered sequence of index values, i-1 is the sequentially previous index value, $n_i$ is the predicted wear indicator value, k is a constant that correlates load and wear for the at least one physical component, $L_{i-1}$ is the one of the predicted load values from the set of predicted load values that corresponds to the sequentially previous index value, and $n_{i-1}$ is the one of the predicted wear indicator values from the set of predicted wear indicator values that corresponds to the sequentially previous index value.

The computer-readable memory can be further encoded with instructions that, when executed by the one or more processors, cause the device to determine the predicted amount of remaining useful life of the at least one physical component based on the set of predicted wear indicator values by at least causing the device to: determine a relative change between each predicted wear indicator value and the one of the predicted wear indicator values from the set of predicted wear indicator values that corresponds to the sequentially previous index value; and determine whether the relative change is within a confidence interval.

The computer-readable memory can be further encoded with instructions that, when executed by the one or more processors, cause the device to determine the relative change according to the equation:

$$ R = \frac{n_i - n_{i-1}}{n_{i-1}} $$

where R is the relative change, $n_i$ is the predicted wear indicator value, and $n_{i-1}$ is the one of the predicted wear indicator values from the set of predicted wear indicator values that corresponds to the sequentially previous index value.

The computer-readable memory can be further encoded with instructions that, when executed by the one or more processors, cause the device to determine the predicted amount of remaining useful life of the at least one physical component based on the set of predicted wear indicator values by at least causing the device to: identify, in response to determining that the relative change is within the confidence interval, whether the predicted wear indicator value satisfies threshold wear criteria; and determine, in response to identifying that the predicted wear indicator value satisfies the threshold wear criteria, the remaining useful life of the at least one physical component based on a value of a current one of the ordered sequence of index values corresponding to the predicted wear indicator value.

The computer-readable memory can be further encoded with instructions that, when executed by the one or more processors, cause the device to determine the predicted amount of remaining useful life of the at least one physical component based on the set of predicted wear indicator values by at least causing the device to: identify, in response to determining that the relative change is not within the confidence interval, whether the one of the predicted wear indicator values from the set of predicted wear indicator values that corresponds to the sequentially previous index value satisfies threshold wear criteria; and determine, in response to identifying that the one of the predicted wear indicator values from the set of predicted wear indicator values that corresponds to the sequentially previous index value satisfies the threshold wear criteria, the remaining useful life of the at least one physical component based on the sequentially previous index value.

The computer-readable memory can be further encoded with instructions that, when executed by the one or more processors, cause the device to: receive measured sensor data of the at least one physical component; determine an operating regime of the at least one physical component based on the measured sensor data; and determine the set of predicted load values based on an operating regime of the at least one physical component.

A health and usage management system can include at least one sensor disposed within an aircraft and a controller device disposed within the aircraft. The controller device can include one or more processors and computer-readable memory. The computer-readable memory can be encoded with instructions that, when executed by the at least one processor, cause the controller device to receive measured sensor data for at least one physical component of the aircraft from the at least one sensor, and determine, based on the measured sensor data, an operating regime of the at least one physical component. The computer-readable memory can be further encoded with instructions that, when executed by the at least one processor, cause the controller device to generate a set of predicted load values for the least one physical component of the aircraft based on the operating regime. Each predicted load value from the set of predicted load values can correspond uniquely to one of an ordered sequence of index values. The computer-readable memory can be further encoded with instructions that, when executed by the at least one processor, cause the controller device to determine a set of predicted wear indicator values corresponding to the at least one physical component. Each predicted wear indicator value of the set of predicted wear indicator values can correspond uniquely to one of the ordered sequence of index values and can be determined based on one of the predicted load values from the set of predicted load values that corresponds to a sequentially previous index value and one of the predicted wear indicator values from the set of predicted wear indicator values that corresponds to the sequentially previous index value. The computer-readable memory can be further encoded with instructions that, when executed by the at least one processor, cause the controller device to determine a predicted amount of remaining useful life of the at least one physical component of the aircraft based on the set of predicted wear indicator values, and output an indication of the predicted amount of remaining useful life of the at least one physical component of the aircraft.

The health and usage management system of the preceding paragraph can optionally include, additionally and/or alternatively, any one or more of the following features, configurations, operations, and/or additional components:

The computer-readable memory can be further encoded with instructions that, when executed by the one or more processors, cause the controller device to determine the set of predicted wear indicator values by at least causing the controller device to determine each predicted wear indicator value of the set of predicted wear indicator values according to the equation:

$$n_i = k \frac{L_{i-1}}{n_{i-1}} + n_{i-1}$$

where i is a current one of the ordered sequence of index values, i-1 is the sequentially previous index value, $n_i$ is the predicted wear indicator value, k is a constant that correlates load and wear for the at least one physical component, $L_{i-1}$ is the one of the predicted load values from the set of predicted load values that corresponds to the sequentially previous index value, and $n_{i-1}$ is the one of the predicted wear indicator values from the set of predicted wear indicator values that corresponds to the sequentially previous index value.

The computer-readable memory can be further encoded with instructions that, when executed by the one or more processors, cause the controller device to determine the predicted amount of remaining useful life of the at least one physical component based on the set of predicted wear indicator values by at least causing the controller device to: determine a relative change between each predicted wear indicator value and the one of the predicted wear indicator values from the set of predicted wear indicator values that corresponds to the sequentially previous index value; and determine whether the relative change is within a confidence interval.

The computer-readable memory can be further encoded with instructions that, when executed by the one or more processors, cause the controller device to determine the predicted amount of remaining useful life of the at least one physical component based on the set of predicted wear indicator values by at least causing the controller device to: identify, in response to determining that the relative change is within the confidence interval, whether the predicted wear indicator value satisfies threshold wear criteria; and determine, in response to identifying that the predicted wear indicator value satisfies the threshold wear criteria, the remaining useful life of the at least one physical component based on a value of a current one of the ordered sequence of index values corresponding to the predicted wear indicator value.

The computer-readable memory can be further encoded with instructions that, when executed by the one or more processors, cause the controller device to determine the predicted amount of remaining useful life of the at least one physical component based on the set of predicted wear indicator values by at least causing the controller device to: identify, in response to determining that the relative change is not within the confidence interval, whether the one of the predicted wear indicator values from the set of predicted wear indicator values that corresponds to the sequentially previous index value satisfies threshold wear criteria; and determine, in response to identifying that the one of the predicted wear indicator values from the set of predicted wear indicator values that corresponds to the sequentially previous index value satisfies the threshold wear criteria, the remaining useful life of the at least one physical component based on the sequentially previous index value.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:

   generating, by a computing device comprising at least one processor, a set of predicted load values for at least one physical component, each predicted load value from the set of predicted load values corresponding uniquely to one of an ordered sequence of index values;
   determining, by the computing device, a set of predicted wear indicator values corresponding to the at least one physical component, each predicted wear indicator value of the set of predicted wear indicator values corresponding uniquely to one of the ordered sequence of index values and determined based on one of the predicted load values from the set of predicted load values that corresponds to a sequentially previous index value and one of the predicted wear indicator values from the set of predicted wear indicator values that corresponds to the sequentially previous index value;

determining, by the computing device, a predicted amount of remaining useful life of the at least one physical component based on the set of predicted wear indicator values; and

outputting, by the computing device, an indication of the predicted amount of remaining useful life of the at least one physical component.

2. The method of claim 1,
wherein determining the set of predicted wear indicator values comprises:

determining each predicted wear indicator value of the set of predicted wear indicator values according to the equation:

$$n_i = k \frac{L_{i-1}}{n_{i-1}} + n_{i-1}$$

wherein i is a current one of the ordered sequence of index values;
wherein i-1 is the sequentially previous index value;
wherein $n_i$ is the predicted wear indicator value;
wherein k is a constant that correlates load and wear for the at least one physical component;
wherein $L_{i-1}$ is the one of the predicted load values from the set of predicted load values that corresponds to the sequentially previous index value; and
wherein $n_{i-1}$ is the one of the predicted wear indicator values from the set of predicted wear indicator values that corresponds to the sequentially previous index value.

3. The method of claim 1,
wherein determining the predicted amount of remaining useful life of the at least one physical component based on the set of predicted wear indicator values comprises:

determining a relative change between each predicted wear indicator value and the one of the predicted wear indicator values from the set of predicted wear indicator values that corresponds to the sequentially previous index value; and
determining whether the relative change is within a confidence interval.

4. The method of claim 3,
wherein determining the relative change comprises determining the relative change according to the equation:

$$R = \frac{n_i - n_{i-1}}{n_{i-1}}$$

wherein R is the relative change;
wherein $n_i$ is the predicted wear indicator value; and
wherein $n_{i-1}$ is the one of the predicted wear indicator values from the set of predicted wear indicator values that corresponds to the sequentially previous index value.

5. The method of claim 3,
wherein determining the predicted amount of remaining useful life of the at least one physical component based on the set of predicted wear indicator values further comprises:

identifying, in response to determining that the relative change is within the confidence interval, whether the predicted wear indicator value satisfies threshold wear criteria; and
determining, in response to identifying that the predicted wear indicator value satisfies the threshold wear criteria, the remaining useful life of the at least one physical component based on a value of a current one of the ordered sequence of index values corresponding to the predicted wear indicator value.

**6.** The method of claim 3,
wherein determining the predicted amount of remaining useful life of the at least one physical component based on the set of predicted wear indicator values further comprises:

identifying, in response to determining that the relative change is not within the confidence interval, whether the one of the predicted wear indicator values from the set of predicted wear indicator values that corresponds to the sequentially previous index value satisfies threshold wear criteria; and
determining, in response to identifying that the one of the predicted wear indicator values from the set of predicted wear indicator values that corresponds to the sequentially previous index value satisfies the threshold wear criteria, the remaining useful life of the at least one physical component based on the sequentially previous index value.

**7.** The method of claim 1,
wherein determining the set of predicted load values for the at least one physical component comprises determining the set of predicted load values based on an operating regime of the at least one physical component.

**8.** The method of claim 7, further comprising:

measuring sensor data of the at least one physical component; and
determining the operating regime based on the measured sensor data.

**9.** A device comprising:

one or more processors; and
computer-readable memory encoded with instructions that, when executed by the at least one processor, cause the device to:

generate a set of predicted load values for at least one physical component of the aircraft, each predicted load value from the set of predicted load values corresponding uniquely to one of an ordered sequence of index values;
determine a set of predicted wear indicator values corresponding to the at least one physical component, each predicted wear indicator value of the set of predicted wear indicator values corresponding uniquely to one of the ordered sequence of index values and determined based on one of the predicted load values from the set of predicted load values that corresponds to a sequentially previous index value and one of the predicted wear indicator values from the set of predicted wear indicator values that corresponds to the sequentially previous index value;
determine a predicted amount of remaining useful life of the at least one physical component of the aircraft based on the set of predicted wear indicator values; and
output an indication of the predicted amount of remaining useful life of the at least one physical component of the aircraft.

**10.** The device of claim 9,
wherein the computer-readable memory is further encoded with instructions that, when executed by the one or more processors, cause the device to determine the set of predicted wear indicator values by at least causing the device to:

determine each predicted wear indicator value of the set of predicted wear indicator values according to the equation:

$$n_i = k\frac{L_{i-1}}{n_{i-1}} + n_{i-1}$$

wherein i is a current one of the ordered sequence of index values;
wherein i-1 is the sequentially previous index value;
wherein $n_i$ is the predicted wear indicator value;
wherein k is a constant that correlates load and wear for the at least one physical component;
wherein $L_{i-1}$ is the one of the predicted load values from the set of predicted load values that corresponds to the sequentially previous index value; and

wherein $n_{i-1}$ is the one of the predicted wear indicator values from the set of predicted wear indicator values that corresponds to the sequentially previous index value.

**11.** The device of claim 9,
wherein the computer-readable memory is further encoded with instructions that, when executed by the one or more processors, cause the device to determine the predicted amount of remaining useful life of the at least one physical component based on the set of predicted wear indicator values by at least causing the device to:

determine a relative change between each predicted wear indicator value and the one of the predicted wear indicator values from the set of predicted wear indicator values that corresponds to the sequentially previous index value; and
determine whether the relative change is within a confidence interval.

**12.** The device of claim 11,
wherein the computer-readable memory is further encoded with instructions that, when executed by the one or more processors, cause the device to determine the relative change according to the equation:

$$R = \frac{n_i - n_{i-1}}{n_{i-1}}$$

wherein R is the relative change;
wherein $n_i$ is the predicted wear indicator value; and
wherein $n_{i-1}$ is the one of the predicted wear indicator values from the set of predicted wear indicator values that corresponds to the sequentially previous index value.

**13.** The device of claim 11,
wherein the computer-readable memory is further encoded with instructions that, when executed by the one or more processors, cause the device to determine the predicted amount of remaining useful life of the at least one physical component based on the set of predicted wear indicator values by at least causing the device to:

identify, in response to determining that the relative change is within the confidence interval, whether the predicted wear indicator value satisfies threshold wear criteria; and
determine, in response to identifying that the predicted wear indicator value satisfies the threshold wear criteria, the remaining useful life of the at least one physical component based on a value of a current one of the ordered sequence of index values corresponding to the predicted wear indicator value.

**14.** The device of claim 11,
wherein the computer-readable memory is further encoded with instructions that, when executed by the one or more processors, cause the device to determine the predicted amount of remaining useful life of the at least one physical component based on the set of predicted wear indicator values by at least causing the device to:

identify, in response to determining that the relative change is not within the confidence interval, whether the one of the predicted wear indicator values from the set of predicted wear indicator values that corresponds to the sequentially previous index value satisfies threshold wear criteria; and
determine, in response to identifying that the one of the predicted wear indicator values from the set of predicted wear indicator values that corresponds to the sequentially previous index value satisfies the threshold wear criteria, the remaining useful life of the at least one physical component based on the sequentially previous index value.

**15.** The device of claim 9,
wherein the computer-readable memory is further encoded with instructions that, when executed by the one or more processors, cause the device to:

receive measured sensor data of the at least one physical component;
determine an operating regime of the at least one physical component based on the measured sensor data; and
determine the set of predicted load values based on an operating regime of the at least one physical component.

Fig. 1

EP 3 232 382 A1

Fig. 2

Europäisches
Patentamt

European
Patent Office

Office européen
des brevets

# EUROPEAN SEARCH REPORT

Application Number

EP 17 16 1105

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 899 676 A1 (SIMMONDS PRECISION PRODUCTS [US]) 29 July 2015 (2015-07-29) <br> * abstract * <br> * figure 2 * <br> * paragraph [0003] - paragraph [0004] * <br> * paragraph [0008] * <br> * paragraph [0010] * <br> * paragraph [0014] * <br> * paragraph [0017] - paragraph [0018] * <br> * paragraph [0020] * <br> ----- | 1-15 | INV.<br>G06Q10/06 |
| X | WO 2015/131193 A1 (SIKORSKY AIRCRAFT CORP [US]) 3 September 2015 (2015-09-03) <br> * abstract * <br> * paragraph [0003] * <br> * paragraph [0024] - paragraph [0027] * <br> * paragraph [0035] - paragraph [0055] * <br> ----- | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 12 April 2017 | Moser, Raimund |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 16 1105

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2017

| Patent document cited in search report | | Publication date | Patent family member(s) | | Publication date |
|---|---|---|---|---|---|
| EP 2899676 | A1 | 29-07-2015 | BR | 102015000309 A2 | 07-06-2016 |
| | | | CA | 2875011 A1 | 13-07-2015 |
| | | | EP | 2899676 A1 | 29-07-2015 |
| | | | JP | 2015133115 A | 23-07-2015 |
| | | | US | 2015198492 A1 | 16-07-2015 |
| WO 2015131193 | A1 | 03-09-2015 | EP | 3111190 A1 | 04-01-2017 |
| | | | US | 2017017736 A1 | 19-01-2017 |
| | | | WO | 2015131193 A1 | 03-09-2015 |

EPO FORM P0459

For more details about this annex : see Official Journal of the European Patent Office, No. 12/82